(19) Europäisches Patentamt
European Patent Office
Office européen des brevets

(11) **EP 2 775 714 A1**

(12) **EUROPEAN PATENT APPLICATION**
published in accordance with Art. 153(4) EPC

(43) Date of publication:
**10.09.2014 Bulletin 2014/37**

(51) Int Cl.:
***H04N 7/32*** *(0000.00)*

(21) Application number: **12845094.7**

(86) International application number:
**PCT/JP2012/006848**

(22) Date of filing: **25.10.2012**

(87) International publication number:
**WO 2013/065263 (10.05.2013 Gazette 2013/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.11.2011 JP 2011241450**

(71) Applicant: **NEC Corporation
Tokyo 108-8001 (JP)**

(72) Inventors:
• **CHONO, Keiichi
Tokyo 1088001 (JP)**
• **AOKI, Hirofumi
Minato-ku
Tokyo 1088001 (JP)**

(74) Representative: **Vossius & Partner
Siebertstrasse 4
81675 München (DE)**

(54) **VIDEO ENCODING DEVICE, VIDEO DECODING DEVICE, VIDEO ENCODING METHOD, VIDEO DECODING METHOD, AND PROGRAM**

(57) A video encoding device includes a down-sampler with sampling position shifter 107 configured to down-sample a luminance signal, and a predictor 101 configured to linearly predict a color difference signal from a down-sampled luminance signal. The down-sampler with sampling position shifter 107 shifts a sampling position of the down-sampled luminance signal in accordance with a scan to be processed. A video decoding device includes a down-sampler with sampling position shifter 205 configured to down-sample a luminance signal, and a predictor 203 configured to linearly predict a color difference signal from a down-sampled luminance signal. The down-sampler with sampling position shifter 205 shifts a sampling position in the down-sampled luminance signal in accordance with a scan to be processed.

## FIG. 7

○ :LUMINANCE SAMPLING POSITION     △ :COLOR DIFFERENCE SAMPLING POSITION

**Description**

**Technical Field**

The present invention relates to a video encoding device and a video decoding device for predicting color difference signal from a down-sampled luminance signal.

**Background Art**

Non Patent Literature (NPL) 1 discloses a new color difference signal prediction (hereinafter, referred to as intra_chromaFromLuma prediction) technique that utilizes cross-correlation between a luminance signal (luma signal) and color difference signal (chroma signal) of the same coding unit. NPL 2 describes specific operation steps of an intra_chromaFromLuma prediction in Section 8.3.3.1.8 Specification of Intra_FromLuma prediction mode. The overview thereof will be described below.

(Step 1) a down-sampled luminance signal $p_Y$' [x, y] (x = -1 .. nS - 1, y = -1 .. nS - 1) obtained by vertically 1/2 down-sampling a reconstructed luminance signal predSamples[x, y] every horizontal 2 pixels is calculated using Formula (1) below.

$$p_Y'[\ x,\ y\ ] = (recSamplesL[\ 2x,\ 2y\ ] +$$
$$recSamplesL[\ 2x,\ 2y + 1\ ]) >> 1 \cdots Formula\ (1)$$

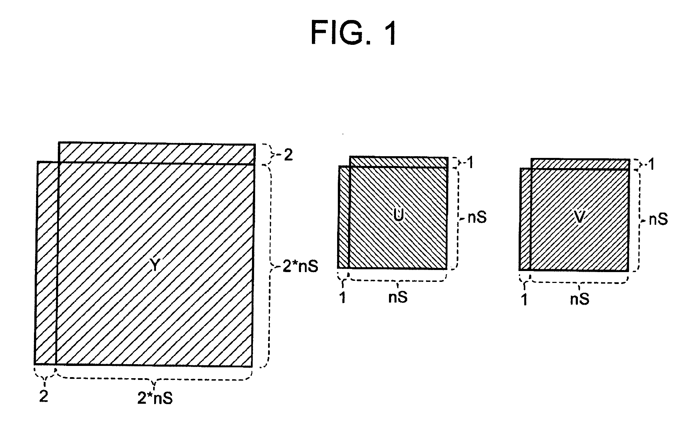

where nS is a width of a color difference signal (color difference block signal) (that is, a width of a reconstructed luminance signal (chrominance block signal) required for processing is 2 + 2 * nS (Fig. 1)).
(Step 2) Based on $p_Y$'[x, y] (x, y = -1 .. nS - 1) and the reconstructed color difference signals p[x, y] (x = -1, y = 0, ... nS - 1 and x = 0, ... nS - 1, y = -1), the sum L of down-sampled luminance signals of the block boundary, the sum C of color difference signals of the block boundary, the sum S of squares of the down-sampled luminance signals of the block boundary, and the sum X of multiplication values between the down-sampled luminance signals of the block boundary and the color difference signals of the block boundary are calculated.
(Step 3) Linear prediction coefficients a and b for linearly predicting color difference signal (y) of the block boundary are calculated from a down-sampled luminance signal ($p_Y$') of the block boundary on the basis of L, C, S, and X. Further, linear prediction coefficients a and b are calculated in order to minimize the sum of squares $\Sigma(y - a*p_Y' - b)^2$ of a prediction error of linear prediction.
(Step 4) Based on the calculated a and b, the color difference prediction signal predSamples[x, y] (x, y = -1 .. nS - 1) in the block is calculated from a down-sampled luminance signal $p_Y$'[x, y] in the block by Formula (2) below.

$$predSamples[x,\ y] = a * p_Y'[x,\ y] + b \cdots Formula\ (2)$$

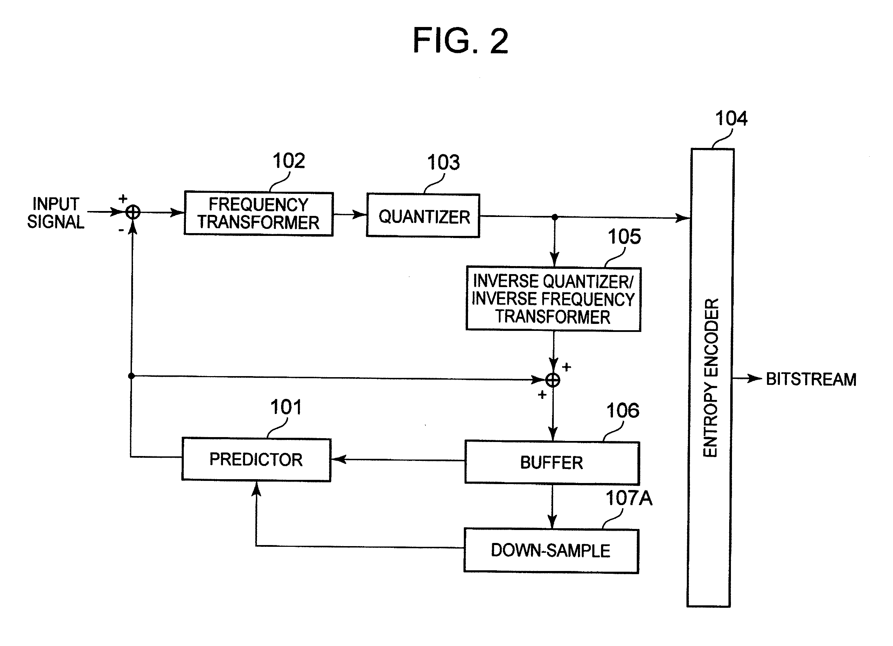

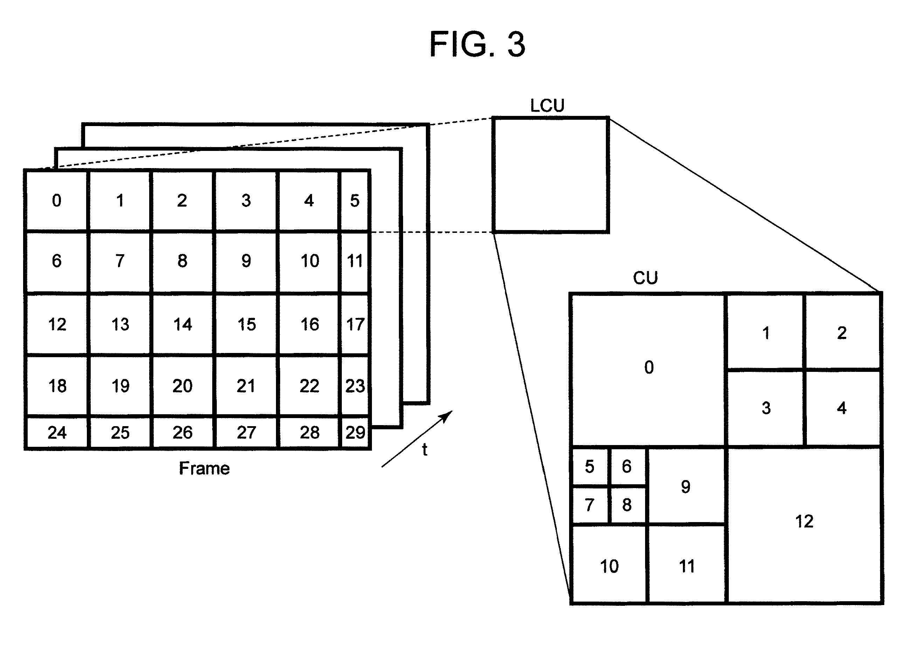

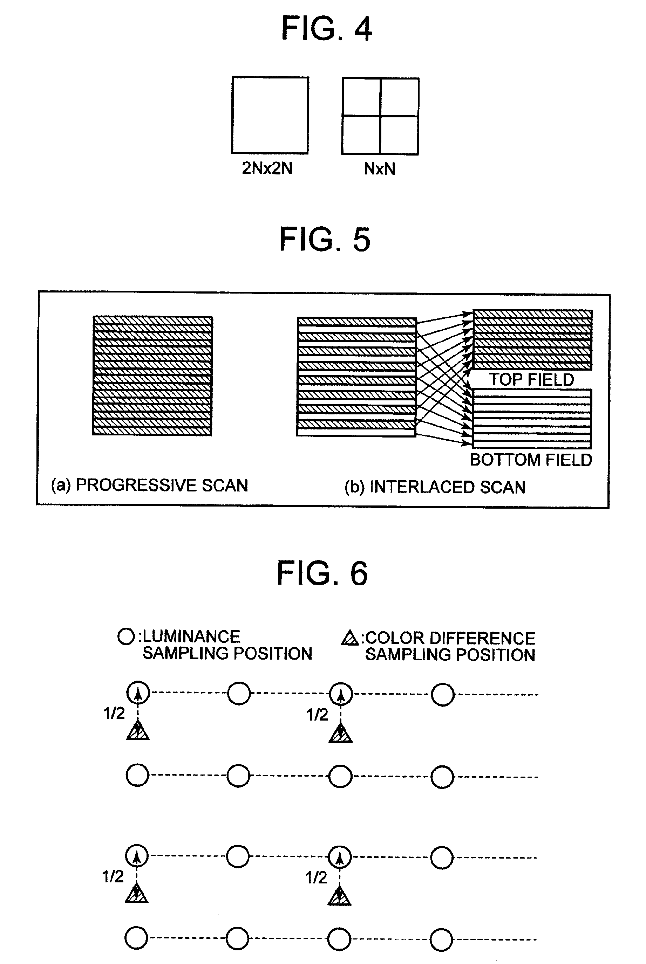

Fig 2 is a block diagram illustrating a video coding device using a prediction intra_chromaFromLuma prediction described in NPL 1. The video encoding device illustrated in Fig. 2 encodes a Largest Coding Unit (LCU) constituting a frame in the raster scan order, and encodes a coding unit (CU) constituting the LCU in a Z scan order (Fig. 3). In addition, the video encoding apparatus further divides the CU into Prediction Units (PUs) (Fig. 4). Thus, the block size of the prediction is a block size of the PU. (For example, when the CU size is 32 × 32 and the PU size is 2N × 2N, nS is 16.)
In the video encoding apparatus illustrated in Fig. 2, a residual signal (residual block signal) obtained by subtracting an input signal (input block signal) from a prediction signal (prediction block signal) generated from the predictor 101 is transformed into a residual frequency conversion quantization index (residual level) through a frequency transformer 102 and a quantizer 103. An entropy encoder 104 entropy-encodes the residual level to output a bitstream. For prediction of the input signal afterward, the residual level is transformed into a reconstructed residual signal (reconstructed residual block signal) through the inverse quantizer/inverse frequency transformer 105, and a signal obtained by adding the prediction signal to the reconstructed residual signal is stored in a buffer 106 as a reconstructed signal (reconstructed block signal). A down-sampler 107A generates a down-sampled luminance signal of the reconstructed luminance signal based on the processing of step 1. The predictor 101 generates a color difference prediction signal based on the processing of steps 2, 3 and 4 using the down-sampled luminance signal supplied from the down-sampler 107A and the reconstructed color difference signal supplied from the buffer 106.

## Citation List

### Non Patent Literature

NPL 1: Jianle Chen, Vadim Seregin, Woo-Jin Han, Jungsun Kim, and Byeongmoon Jeon, "CE6.a.4: Chroma intra prediction by reconstructed luma samples", JCTVC-E266, Joint Collaborative Team on Video Coding (JCT-VC) of ITU-T SG16 WP3 and ISO/IEC JTC1/SC29/WG11 5th Meeting: Geneva, 16-23 March, 2011
NPL 2: Benjamin Bross, Woo-Jin Han, Jens-Rainer Ohm, Gary J. Sullivan, and Thomas Wiegand, "WD4: Working Draft 4 of High-Efficiency Video Coding", JCTVC-F803_d1, Joint Collaborative Team on Video Coding (JCT-VC) of ITU-T SG16 WP3 and ISO/IEC JTC1/SC29/WG11 6th Meeting: Torino, IT, 14-22 July, 2011
NPL 3: "ISO/IEC 14496-10
NPL 4: Minezawa, K. Sugimoto, S. Sekiguchi (Mitsubishi), "An improvement to chroma intra prediction from luma", JCTVC-F173, Joint Collaborative Team on Video Coding (JCT-VC) of ITU-T SG16 WP3 and ISO/IEC JTC1/SC29/WG11 6th Meeting: Torino, IT, 14-22 July, 2011
NPL 5: Jianle Chen, "BoG report on simplification of intra_chromaFromLuma mode prediction", JCTVC-F760, Joint Collaborative Team on Video Coding (JCT-VC) of ITU-T SG16 WP3 and ISO/IEC JTC1/SC29/WG11 6th Meeting: Torino, IT, 14-22 July, 2011

## Summary of Invention

### Technical Problem

In a progressive scanning 4 : 2 : 0 and an interlaced scanning of 4 : 2 : 0 (Fig. 5(a) and 5(b)), the sampling positions in the color difference signal corresponding to the sampling positions in the luminance signal are different (Fig. 6, Fig. 7, and Fig. 8). (Note that the sampling positions in a color difference signal corresponding to the sampling positions under interlaced scan of 4 : 2 : 0 have been also described in Fig. 6-2 of NPL 1.)

The technique described in NPL 1 longitudinally shifts a sampling position in a down-sampled luminance signal (down-sampled luminance sampling position) by 1/2 pixels. Therefore, a down-sampled luminance sampling position under interlaced scan of 4 : 2 : 0 is longitudinally shifted.

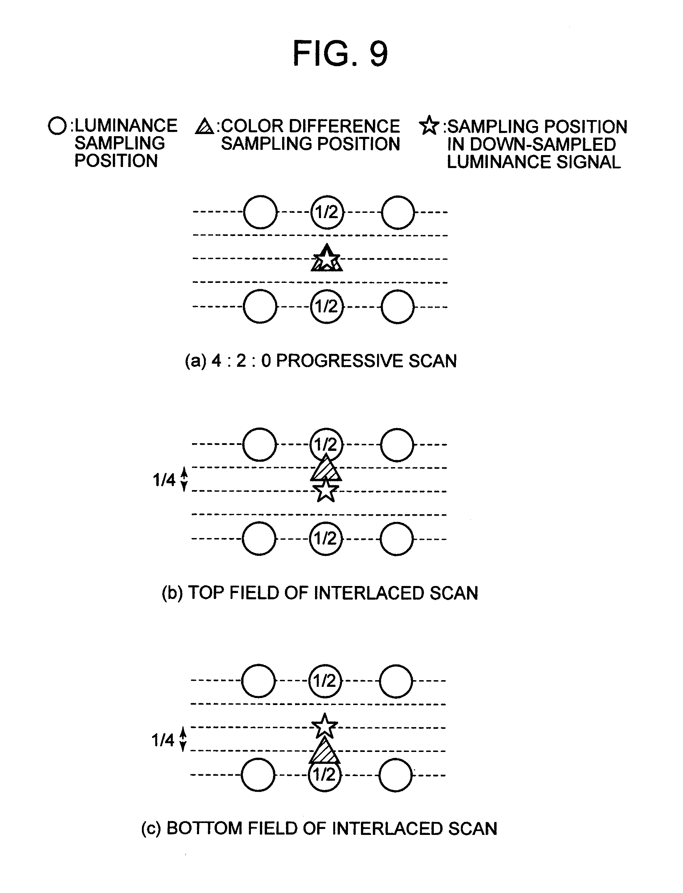

Specifically, in the interlaced scanning, a sampling position in a down-sampled luminance signal corresponding to sampling position in a color difference signal is shifted downward in the top field by 1/4 pixels (Fig. 9(b)). In addition, a sampling position in the down-sampled luminance signal corresponding to a sampling position in the color difference signal is shifted in the bottom field by 1/4 pixels (Fig. 9(b)).

If the sampling position in the down-sampled luminance signal is longitudinally shifted, the color difference prediction signal is generated from the down-sampled luminance signal in which a sampling position is longitudinally shifted. As a result, since the sampling position in the color difference prediction signal is also longitudinally shifted, there is a problem that the image quality of the color difference signal is lowered.

The present invention is directed to suitably maintain the sampling position in the color difference prediction signal generated from the down-sampled luminance signal, thereby preventing degradation in image quality of the color difference signals.

### Solution to Problem

A video encoding device according to the present invention comprises: a luminance signal down-sample means configured to down-sample a luminance signal; and a prediction means configured to linearly predict a color difference signal from a down-sampled luminance signal, wherein the luminance signal down-sample means shifts a sampling position in the down-sampled luminance signal depending on a scan to be processed.

A video decoding device according to the present invention comprises: a luminance signal down-sample means configured to down-sample a luminance signal; and a prediction means configured to linearly predict a color difference signal from a down-sampled luminance signal, wherein the luminance signal down-sample means shifts a sampling position in the down-sampled luminance signal depending on a scan to be processed.

A video encoding method according to the present invention is a video encoding method comprising: down-sampling a luminance signal and linearly predicting a color difference signal from a down-sampled luminance signal, the method further comprising: shifting a sampling position in the down-sampled luminance signal depending on a scan to be processed.

A video decoding method according to the present invention is a video decoding method comprising: down-sampling a luminance signal and linearly predicting to a color difference signal from a down-sampled luminance signal, the method further comprising: shifting a sampling position in the down-sampled luminance signal depending on a scan to be processed.

A video encoding program according to the present invention is a video encoding program for causing a computer to execute a process of down-sampling a luminance signal and a process of linearly predicting a color difference signal from a down-sampled luminance signal, and the video encoding program causes a computer to execute a process of shifting a sampling position in the down-sampled luminance signal depending on a scan to be processed.

A video decoding program according to the present invention is a video decoding program for causing a computer to execute a process of down-sampling a luminance signal and a process of linearly predicting a color difference signal from a down-sampled luminance signal, and the video decoding program causes a computer to execute a process of shifting a sampling position in the down-sampled luminance signal depending on a scan to be processed.

**Advantageous Effects of Invention**

According to the present invention, the sampling position in the color difference prediction signal generated from the down-sampled luminance signal is kept suitable, and it is possible to prevent degradation in image quality of the color difference signals.

**Brief Description of Drawings**

Fig. 1 It depicts an explanatory diagram illustrating the relationship between a luminance block (Y) and color difference blocks (V and U).

Fig. 2 It depicts a configuration diagram illustrating a general video encoding device.

Fig. 3 It depicts an explanatory diagram illustrating the relationship between, a frame, an LCU, and a CU.

Fig. 4 It depicts an explanatory diagram illustrating a shape of a PU (in the case of intra-CU).

Fig. 5. It depicts an explanatory diagram illustrating an example of a progressive scanning and an interlaced scanning.

Fig. 6 It depicts an explanatory diagram illustrating sampling positions in a color difference signal and a luminance signal under progressive scan.

Fig. 7 It depicts an explanatory diagram illustrating the sampling positions of the luminance signal and the color difference signal in the top field of the interlaced scanning.

Fig. 8 It depicts an explanatory diagram illustrating the sampling positions of the luminance signal and the color difference signal in the bottom field of the interlaced scanning.

Fig. 9 It depicts an explanatory diagram illustrating a luminance down-sampling position (number within a circle in the luminance sampling position is a filter coefficient) according to the related art.

Fig. 10 It depicts a block diagram illustrating a configuration example of a video encoding device according to a first exemplary embodiment.

Fig. 11 It depicts a flowchart illustrating an operation example of a down-sampler with sampling position shifter.

Fig. 12 It depicts an explanatory diagram illustrating a luminance down-sampling position (number within a circle in the luminance sampling position is a filter coefficient) according to the present technology.

Fig. 13 It depicts a block diagram illustrating a configuration example of a video encoding device according to a second exemplary embodiment.

Fig. 14 It depicts a flowchart illustrating an operation example of a down-sampler with sampling position shifter.

Fig. 15 It depicts an explanatory diagram illustrating a first example of a luminance down-sampling position according to other embodiments of the present invention.

Fig. 16 It depicts an explanatory diagram illustrating a second example of the luminance down-sampling position according to other embodiments of the present invention.

Fig. 17 It depicts an explanatory diagram illustrating an example of a frame packing of an interlaced signal.

Fig. 18 It depicts a block diagram illustrating a configuration example of an information processing apparatus according to the present invention.

**Description of Embodiments**

The present invention generates a down-sampled luminance signal of a sampling position corresponding to a sampling position in a color difference signal with respect to a sampling position in a luminance signal to be processed. If a target to be processed is scanned by a 4 : 2 : 0 progressive scanning, a down-sampled luminance signal with a sampling position vertically shifted by 1/2 pixels is generated. If a target to be processed is a top field of a 4 : 2 : 0 interlaced scanning, a down-sampled luminance signal with a sampling position vertically shifted by 1/4 pixels is generated. If a target to be processed is a bottom field of the 4 : 2 : 0 interlaced scanning, a down-sampled luminance signal with a sampling position vertically shifted by 3/4 is generated. Thus, a down-sampled luminance signal of a sampling position corresponding to a scan to be processed is generated. As a result, the sampling position in the color difference prediction signal generated from the down-sampled luminance signal is kept suitable, and it is possible to prevent degradation in image quality of the color difference signals.

**First Exemplary Embodiment**

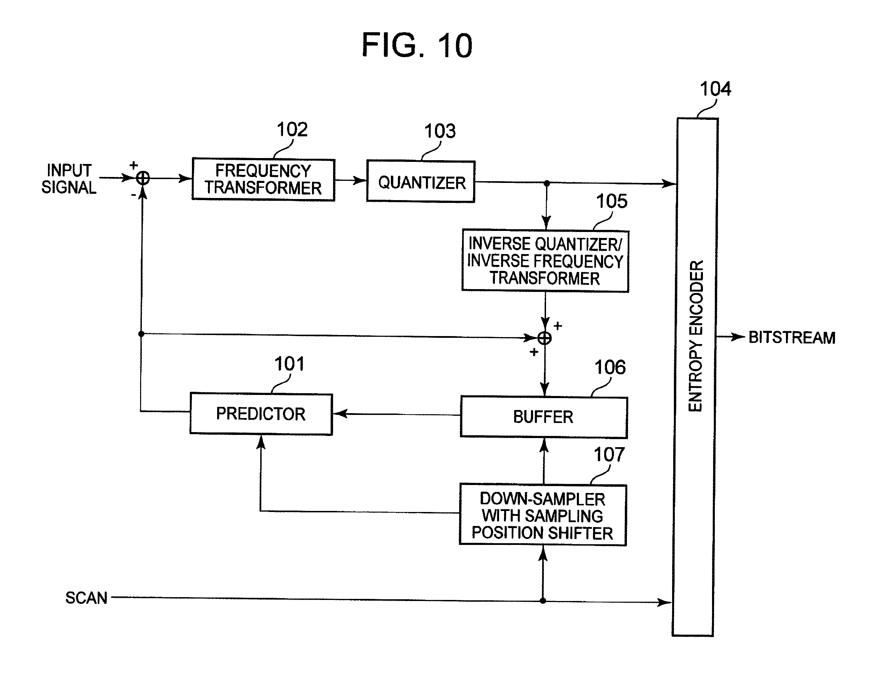

A video encoding device of a first exemplary embodiment illustrated in Fig. 10 includes a predictor 101, a frequency transformer 102, a quantizer 103, an entropy encoder 104, an inverse quantizer/inverse frequency transformer 105, a buffer 106, and a down-sampler with sampling position shifter 107.

As is apparent from comparison with a video encoding device illustrated in Fig. 2, the down-sampler with sampling position shifter 107 is the feature part of the present invention. Since multiplexing the scan according to a bitstream by the entropy encoder 104 is not the feature of the present invention, the entropy encoder 104 is also equivalent to the entropy encoder 104 illustrated in Fig. 2. Hereinafter, the operation of the down-sampler with sampling position shifter 107 being the feature of the present invention will be described.

The down-sampler with sampling position shifter 107 generates a down-sampled luminance signal having a shift amount which corresponds to the sampling position in the color difference signal corresponding to the sampling position in the luminance signal in the scan to be processed.

The scanning to be processed may be determined by the video encoding device according to a dynamic/static determination of a target to be processed (applying a progressive scanning to a static area, applying an interlaced scanning to a dynamic region wherein an odd line is assigned to a top field and an even line is assigned to a bottom field) or an encoding determination (the better encoding result of the progressive scanning and the interlaced scanning). It is assumed that the auxiliary information on the scanning to be processed is multiplexed to a bitstream by the entropy encoder 104. Moreover, if the scanning to be processed is the interlaced scanning, it is assumed that auxiliary information indicating the top field or the bottom field is also multiplexed to the bitstream by the entropy encoder 104.

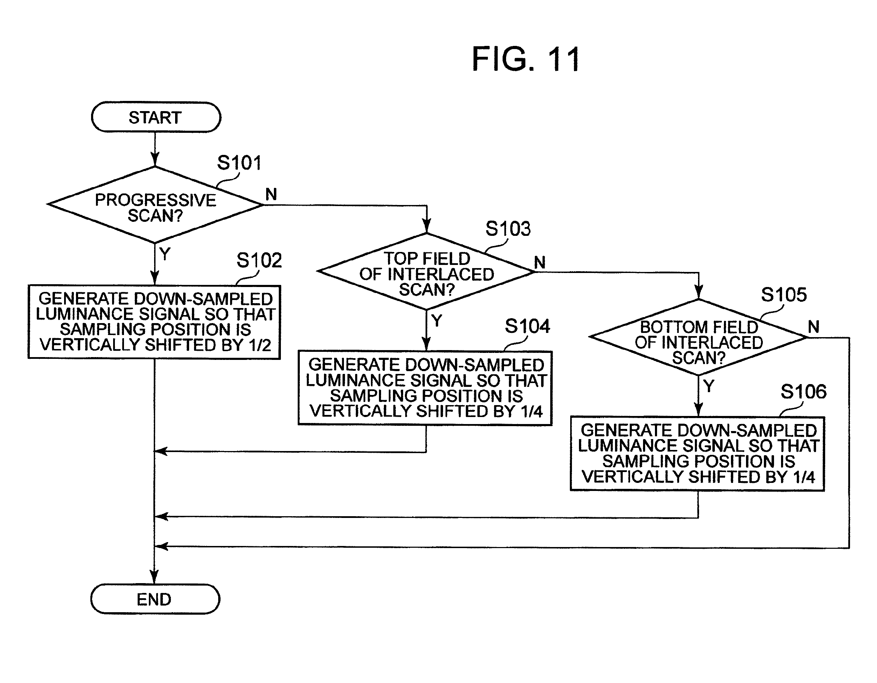

Hereinafter, the operation of the down-sampler with sampling position shifter 107 being the feature of the present invention will be described with reference to the flowchart of Fig. 11.

If a target to be processed is the progressive scanning (step S101), a down-sampler with sampling position shifter 107, in step S102, calculates a down-sampled luminance signal $p_Y'[x, y]$ (x = -1 .. nS - 1, y = -1 .. nS - 1) in the above-described step 1 by Formula (3) below.

$$p_Y'[x, y] = (recSamplesL[2x, 2y] + recSamplesL[2x, 2y + 1]) \gg 1 \cdots \text{Formula (3)}$$

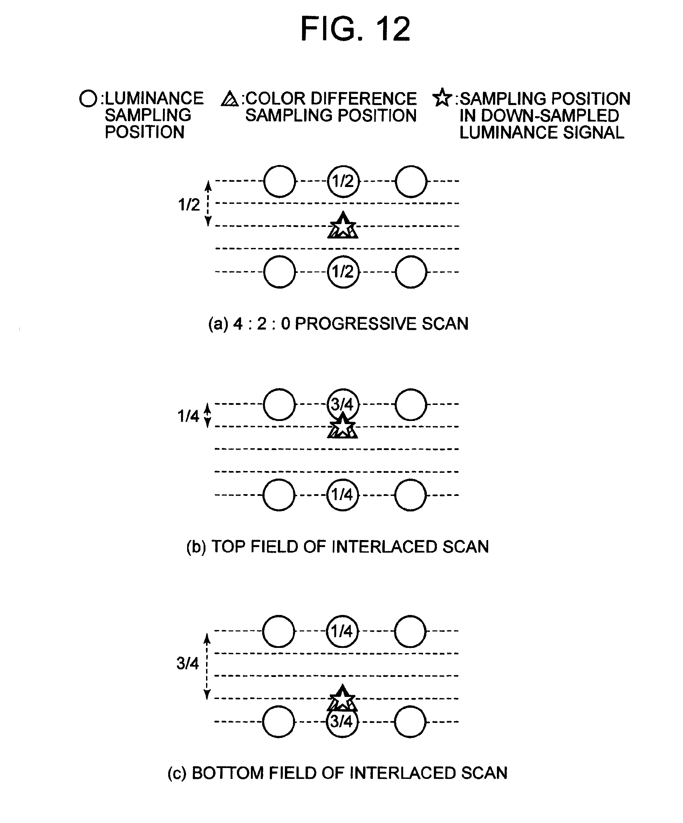

That is, a down-sampled luminance signal is generated by a filter of [1/2, 1/2] so that a sampling position in the down-sampled luminance signal is vertically shifted by 1/2 (Fig. 12 (a)).

When the target to be processed is the top field of interlaced scanning (step S103), the down-sampler with sampling position shifter 107, in step S104, calculates the down-sampled luminance signal $p_Y'[x, y]$ (x = -1 .. nS - 1, y = -1 .. nS - 1) according to the above-described step 1 by Formula (4) below.

$$p_Y'[x, y] = (3*recSamplesL[2x, 2y] + recSamplesL[2x, 2y + 1]) \gg 2 \cdots \text{Formula (4)}$$

That is, a down-sampled luminance signal is generated by a filter of [3/4, 1/4] so that the sampling position in the down-sampled luminance signal is vertically shifted by 1/4 (Fig. 12 (b)).

When the target to be processed is the bottom field of interlaced scanning (step S105), the down-sampler with sampling position shifter 107, in step S106, calculates the down-sampled luminance signal $p_Y'[x, y]$ (x = -1 .. nS - 1, y = -1 .. nS - 1) in the above-described step 1 by Formula (5) below.

$$p_Y'[x, y] = (recSamplesL[2x, 2y] + 3*recSamplesL[2x, 2y + 1]) >> 2 \cdots \text{Formula (5)}$$

That is, a down-sampled luminance signal is generated by a filter of [1/4, 3/4] so that the sampling position in the down-sampled luminance signal is vertically shifted by 3/4 (Fig. 12 (c)).

As above, the description about the operation of the down-sampler with sampling position shifter 107 is finished.

By the operation of the down-sampler with sampling position shifter 107 as described above, a down-sampled luminance signal having a shift amount with respect to a sampling position in a luminance signal is generated according to a scan to be processed. As a result, in the video encoding device of the present invention, it is possible to suitably maintain a sampling position in a color difference prediction signal generated from the down-sampled luminance signal, thereby preventing the degradation in image quality of the color difference signal.

**Second Exemplary Embodiment**

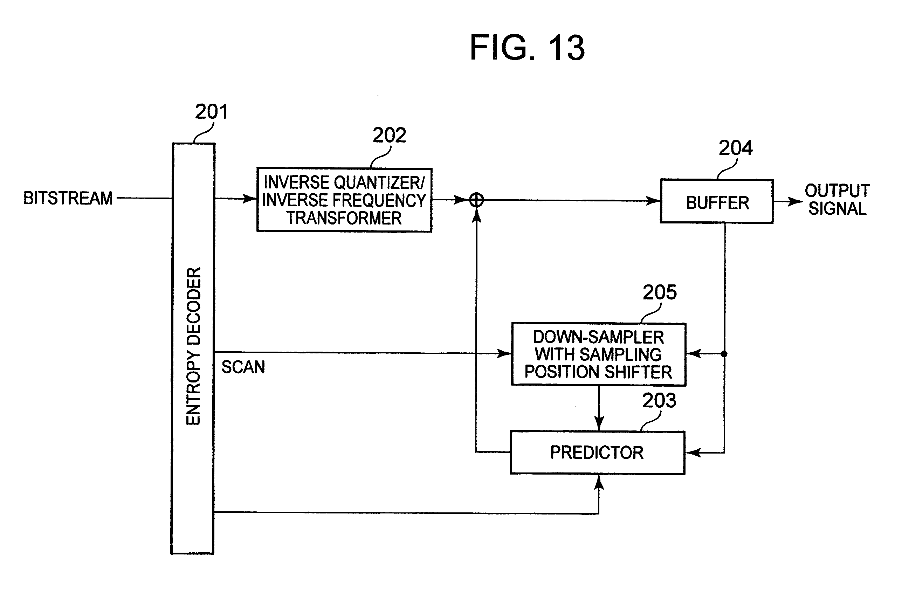

A video decoding device according to a second exemplary embodiment of the present invention illustrated in Fig. 13 includes an entropy decoder 201, an inverse quantizer/inverse frequency transformer 202, a predictor 203, a buffer 204, and a down-sampler with sampling position shifter 205.

The entropy decoder 201 entropy-decodes a bitstream, and entropy-decodes a scan to be processed (frame, block or slice) and a residual level. In addition, if the scanning of the target to be processed is an interlaced scanning, auxiliary information indicating the top field or the bottom field is also entropy-decoded.

The inverse quantizer/inverse frequency transformer 202 inverse-quantizes a supplied residual level, and performs inverse frequency transform of the inverse-quantized residual level to output a reconstructed residual signal. A prediction signal supplied from the predictor 203 is added to reconstructed residual signal so that the result is stored in the buffer 204 as a reconstructed signal.

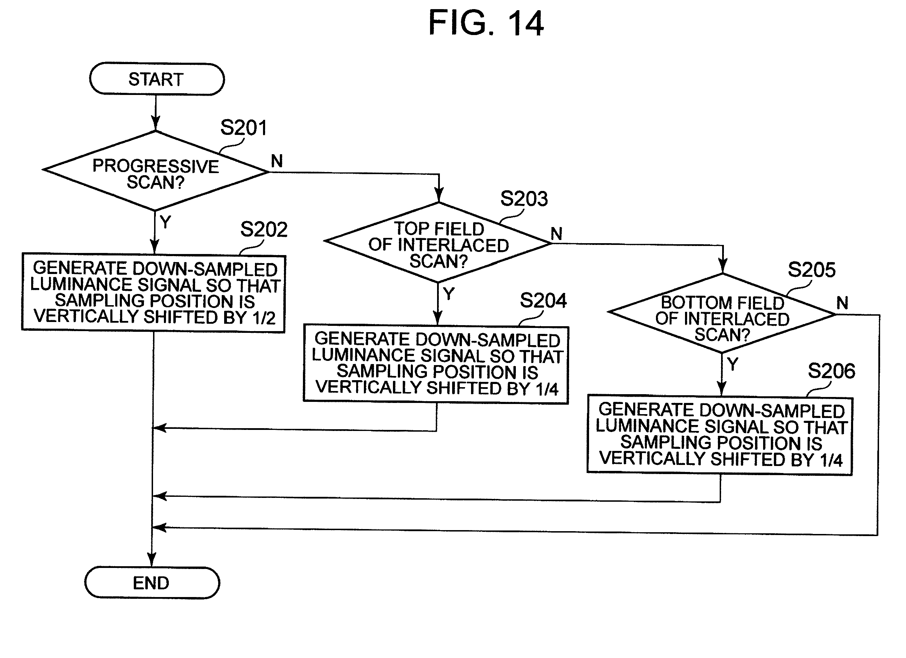

The operation of the down-sampler with sampling position shifter 205 being the feature of the present invention will now be described with reference to the flowchart of Fig. 14.

The down-sampler with sampling position shifter 205 generates a down-sampled luminance signal of a sampling position which corresponds to sampling position of color difference signal corresponding to a sampling position in a luminance signal of a scan based on the scan to be processed, which is supplied from the entropy decoder 201.

Specifically, when the target to be processed is the progressive scanning (step S201), the down-sampler with sampling position shifter 205, in step S202, the down-sampled luminance signal $p_Y'[x, y]$ (x = -1 .. nS - 1, y = - 1 .. nS - 1) in the above-described step 1 by Formula (3).

That is, a down-sampled luminance signal is generated by a filter of [1/2, 1/2] so that a sampling position in the down-sampled luminance signal is vertically shifted by 1/2 (Fig. 12 (a)).

When the target to be processed is the top field of interlaced scanning (step S203), the down-sampler with sampling position shifter 205, in step S204, calculates the down-sampled luminance signal $p_Y'[x, y]$ (x = -1 .. nS - 1, y = -1 .. nS - 1) according to the above-described step 1 by Formula (4) below.

That is, the down-sampled luminance signal is generated by a filter of [3/4, 1/4] so that a sampling position in the down-sampled luminance signal is vertically shifted by 1/4 (Fig. 12 (b)).

When the scan to be processed is the bottom field of interlaced scanning (step S205), the down-sampler with sampling position shifter 205, in step S206, calculates the down-sampled luminance signal $p_Y'[x, y]$ (x = -1 .. nS - 1, y = -1 .. nS - 1) in the above-described step 1 by Formula (5) below.

That is, the down-sampled luminance signal is generated by a filter of [1/4, 3/4] so that the sampling position in the down-sampled luminance signal is vertically shifted by 3/4 (Fig. 12 (c)).

Using the down-sampled luminance signal supplied from the down-sampler with sampling position shifter 205 and the reconstructed color difference signal supplied from the buffer 204, the predictor 203 generates the color difference prediction signal on the basis of the processing in the above-described steps 2, 3 and 4.

As above, the description about the operation of the video decoding device of the second exemplary embodiment of the present invention is finished.

By the operation of the down-sampler with sampling position shifter 205 as described above, a down-sampled luminance signal having a shift amount according to a sampling position in color difference signal corresponding to a sampling position in a luminance signal of a scan to be processed is generated based on the scan to be processed, which is supplied from the entropy decoder 201. As a result, in the video decoding device of the present invention, it is possible to suitably maintain a sampling position in a color difference prediction signal generated from the down-sampled luminance signal, thereby preventing the degradation in image quality of the color difference signal.

**Third Exemplary Embodiment**

Incidentally, NPL 4 is suggested to calculate a down-sampled luminance signal $p_Y'[x, y]$ (x, y = 0 .. nS - 1) in a block by Formula (6) below instead of Formula (1).

$$p_Y'[x, y] = (recSamplesL[2x - 1, 2y] +$$
$$2*recSamplesL[2x, 2y] + recSamplesL[2x + 1, 2y] +$$
$$recSamplesL[2x - 1, 2y + 1] + 2*recSamplesL[2x, 2y + 1] +$$
$$recSamplesL[2x + 1, 2y + 1]) >> 3 \cdots Formula\ (6)$$

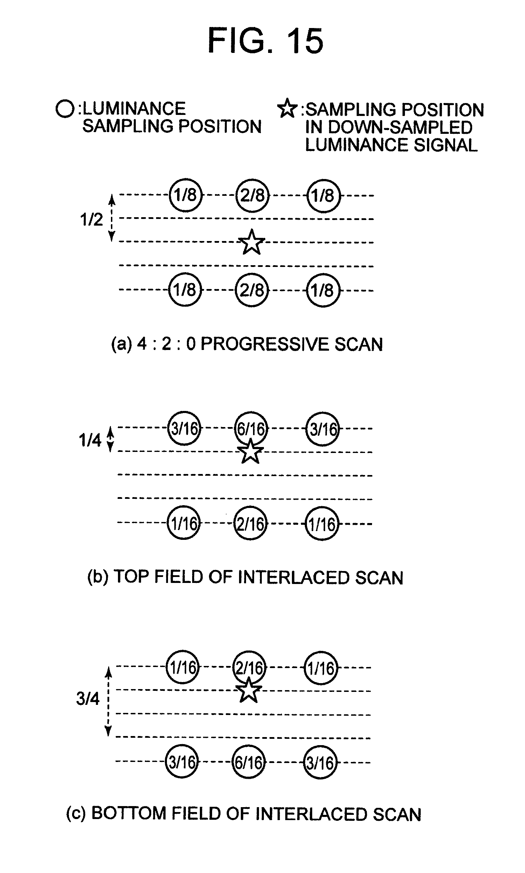

Formula (6) means that the shifted luminance signal is down-sampled by 1/2 by vertically shifting a luminance signal by 1/2 pixels using a two-dimensional filter with coefficients of [[1/8, 2/8, 1/8] and [1/8, 2/8, 1/8]] (Fig. 15 (a)).
When a two-dimensional filter described above is used in a progressive scanning to be processed, if a target to be processed is a top field of an interlaced scanning, the down-sampler with sampling position shifter according to the above exemplary embodiment may generate a down-sampled luminance signal by a two-dimensional filter with coefficients of [[3/16, 6/16, 3/16] and [1/16, 2/16, 1/16]] so that a sampling position in a down-sampled luminance signal is vertically 1/4 shifted in step 1 (Fig. 15(b)). That is, if the target to be processed is a top field of an interlaced scanning, Formula (7) below may be used.

$$p_Y'[x, y] = (3*recSamplesL[2x - 1, 2y] +$$
$$6*recSamplesL[2x, 2y] + 3*recSamplesL[2x + 1, 2y] +$$
$$recSamplesL[2x - 1, 2y + 1] + 2*recSamplesL[2x, 2y + 1] +$$
$$recSamplesL[2x + 1, 2y + 1]) >> 4 \cdots Formula\ (7)$$

Similarly, if the target to be processed is a bottom field of an interlaced scanning, the down-sampler with sampling position shifter according to the above exemplary embodiment may generate the down-sampled luminance signal by a two-dimensional filter with coefficients of [[1/16, 2/16, 1/16] and [3/16, 6/16, 3/16]] so that a sampling position in a down-sampled luminance signal is vertically 3/4 shifted in step 1 (Fig. 15(b)). That is, if the target to be processed is a bottom field of an interlaced scanning, Formula (8) below may be used.

$$p_Y'[ x, y ] = (recSamplesL[2x - 1, 2y] +$$
$$2*recSamplesL[2x, 2y] + recSamplesL[2x + 1, 2y] +$$
$$3*recSamplesL[2x - 1, 2y + 1] + 6*recSamplesL[2x, 2y + 1] +$$
$$3*recSamplesL[2x + 1, 2y + 1]) >> 4 \cdots Formula\ (8)$$

**Fourth Exemplary Embodiment**

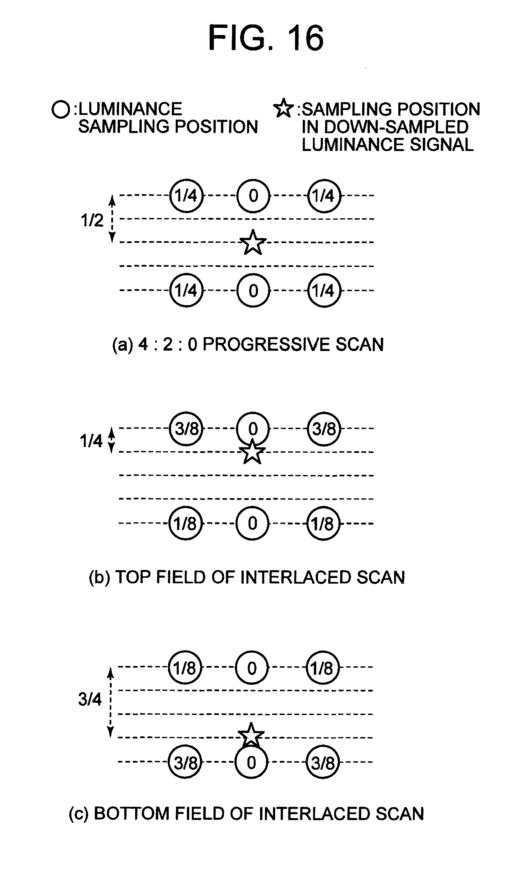

Unlike the third exemplary embodiment, a sample-position shift down-sampler according to a fourth exemplary embodiment may use a two-dimensional filter of Figs. 16(a) to 16(c).
In other words, if the target to be processed is a progressive scanning, Formula (9) below may be used.

$$p_Y'[x, y] = (recSamplesL[2x - 1, 2y] + recSamplesL[2x$$
$$+ 1, 2y] + recSamplesL[2x - 1, 2y + 1] + recSamplesL[2x + 1,$$
$$2y + 1]) >> 2 \cdots Formula\ (9)$$

If the target to be processed is the top field of interlaced scanning, Formula (10) below may be used.

$$p_Y'[x, y] = (3*recSamplesL[2x - 1, 2y] +$$
$$3*recSamplesL[2x + 1, 2y] + recSamplesL[2x - 1, 2y + 1] +$$

$$recSamplesL[2x + 1, 2y + 1]) >> 3 \cdots Formula (10)$$

If the target to be processed is the bottom field of interlaced scanning, Formula (11) below may be used.

$$p_Y'[x, y] = (recSamplesL[2x - 1, 2y] + recSamplesL[2x + 1, 2y] + 3*recSamplesL[2x - 1, 2y + 1] + 3*recSamplesL[2x + 1, 2y + 1]) >> 3 \cdots Formula (11)$$

**Fifth Exemplary Embodiment**

Incidentally, NPL 5 is suggested to calculate a row down-sampled luminance signal $p_Y'[x, y]$ ($x$ = 0 .. nS - 1, $y$ = -1) in a block boundary by Formula (12) below in order to remove the line buffer.

$$p_Y'[x, y] = (recSamplesL[2x - 1, -1] +$$
$$2*recSamplesL[2x, -1] + recSamplesL[2x + 1, -1]) >> 2 \cdots$$
$$Formula (12)$$

When combining the present invention with the technique described in NPL 5, a row down-sampled luminance signal of the block boundary may be calculated by Formula (12) above, and other down-sampled luminance signal may be calculated by Formulas of the present invention.
Furthermore, in order to reduce the calculation amount, NPL 5 has suggested to calculate a column down-sampled luminance signal $p_Y'[x, y]$ ($x$ = -1, $y$ = 0 .. nS - 1) of the block boundary by Formula (13) below.

$$p_Y'[x, y] = (recSamplesL[2x, 2y] + recSamplesL[2x, 2y + 1]) >> 1 \cdots Formula (13)$$

When combining the present invention with a technique described in NPL 5, row and column luminance signals of the block boundary may be calculated by Formulas (12) and (13) above, respectively, and other down-sampled luminance signals may be calculated by Formula of the present invention. In addition, a column down-sampled luminance signal $p_Y'[x, y]$ ($x$ = -1, $y$ = 0 .. nS - 1) of the block boundary may be calculated by Formulas (1), (2) and (3) according to the first exemplary embodiment and the second exemplary embodiment.

**Sixth Exemplary Embodiment**

Video encoding based on NPL 3 may signal to a video decoding side that the target to be processed is the progressive scanning by setting field_pic_flag described in 7.3.3 Slice header syntax as 0 and setting mb_field_decoding_flag described in 7.3.4 Slice data syntax described as 0. The video encoding may also signal to the video decoding side that the target to be processed is the top field of the interlaced scanning by setting field_pic_flag and bottom_field_flag described in 7.3.3 Slice header syntax as 1 and 0, respectively, and by setting mb_field_decoding_flag described in 7.3.4 Slice data syntax as 1. Similarly, the video encoding may also signal to the video decoding side that the target to be processed is the top field of the interlaced scanning by setting field_pic_flag described in 7.3.3 Slice header syntax as 1, by setting bottom_field_flag as 1, and by setting mb_field_decoding_flag described in 7.3.4 Slice data syntax as 1.

**Seventh Exemplary Embodiment**

Incidentally, video coding based on NPL 2 does not include the field_pic_flag syntax, the bottom_field_flag syntax, and the mb_field_decoding_flag syntax of NPL 3. Thus, as alternatives of the syntaxes, it may newly define a syntax that explicitly indicates a sampling position relationship between the luminance signal and the color difference signal to be processed (that is, the shift amount of the sampling position in the down-sampled luminance signal).

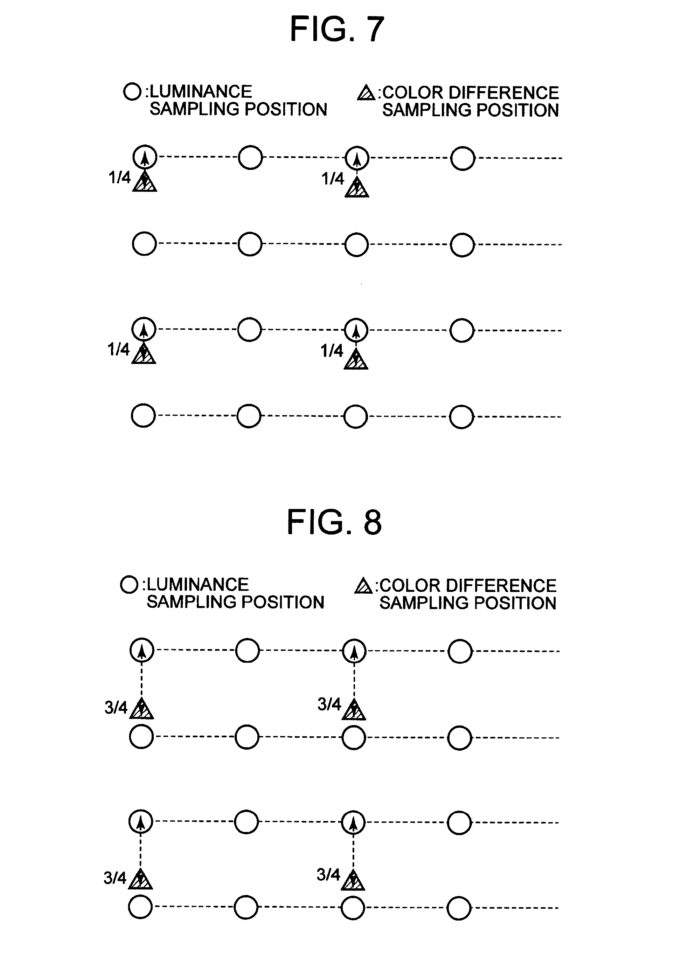

For example, referring to Fig. 6, the sampling position relationship between the luminance signal and the color difference signal to be processed under progressive scan is vertically shifted by 1/2 pixels. Referring to Fig. 7, the sampling position relationship between the luminance signal and the color difference signal to be processed in the top field of the interlaced scanning is vertically shifted by 1/4 pixels. Referring to Fig. 8, the sampling position relationship between the luminance signal and the color difference signal to be processed in the bottom field of the interlaced scanning is vertically shifted by 3/4 pixels. Therefore, a syntax luma_down_sampling_shift_idc indicating the shift amount of the sampling position in the down-sampled luminance signal may be defined as follows.

luma_down_sampling_shift_idc indicates the shift amount of the sampling position in the down-sampled luminance signal. luma_down_sampling_shift_idc = 0 indicates a shift amount of 1/2 pixels. luma_down_sampling_shift_idc = 1 indicates the shift amount of 1/4 pixels. luma_down_sampling_shift_idc = 2 indicates the shift amount of 3/4 pixels. luma_down_sampling_shift_idc has a value in the range of 0 to 3. If the luma_down_sampling_shift_idc is not present, its value is regarded as 0.

Based on 1/2 pixel shift in the progressive scanning, a shift amount of 1/4 pixels in the top field of the interlaced scanning is -1/4 pixel shift, and a shift amount of 3/4 pixels in the bottom field of the interlaced scanning is 1/4 pixel shift. In that case, the above definition is as follows.

luma_down_sampling_shift_idc indicates the shift amount of the sampling position in the down-sampled luminance signal. luma_down_sampling_shift_idc = 0 indicates a shift amount of 1/2 pixels. luma_down_sampling_shift_idc = 1 indicates the shift amount of -1/4 pixels with respect to the shift amount of the luma_down_sampling_shift_idc = 0. luma_down_sampling_shift_idc = 2 indicates the shift amount of +1/4 pixels with respect to the shift amount of a luma_down_sampling_shift_idc = 0. luma_down_sampling_shift_idc has a value in the range of 0 to 3. If the luma_down_sampling_shift_idc is not present, its value is regarded as 0.

The luma_down_sampling_shift_idc syntax may be signaled in a signaling/sequence parameter set, a picture parameter set, a slice header, and the like.

**Eighth Exemplary Embodiment**

Furthermore, video encoding based on NPL 2 does not include the field_pic_flag syntax, the bottom_field_flag syntax, and the mb_field_decoding_flag syntax of NPL 3. Therefore, when encoding an input video of an interlaced scanning signal of 4 : 2 : 0, it may be considered to invalidate the intra_chromaFromLuma prediction. To invalidate the intra_chromaFromLuma prediction is to set chroma_pred_from_luma_enabled_flag described in 7.3.2.1 Sequence parameter set RBSP syntax as 0 or to set the chroma_pred_from_luma_enabled_flag and 1, and to set intra_chroma_pred_mode described in 7.3.7 Prediction unit syntax to non-zero (set IntraPredMode to a value other than 35, that is, Intra_FromLuma prediction mode). The input video of the interlaced scanning signal of 4 : 2 : 0 may be detected by an external setting, or may be detected by the dynamic/static determination.

**Ninth Exemplary Embodiment**

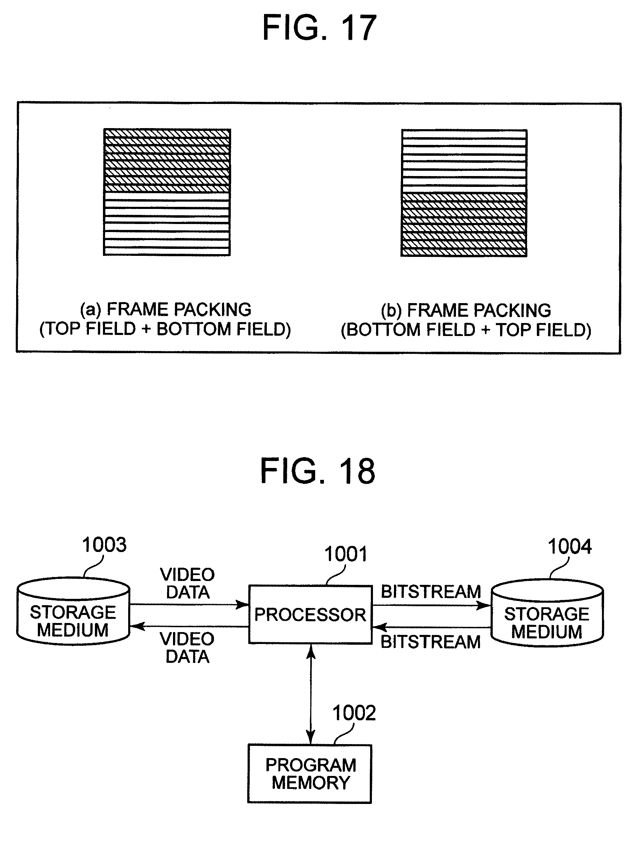

Meanwhile, the present invention is also applicable to a packed frame illustrated in Fig. 17(a) and 17(b). Fig. 17(a) illustrates a frame packing where a top field and a bottom field are disposed at a lower half and an upper half of one frame, respectively. In the frame packing case of Fig. 17(a), in the encoding/decoding of the upper half of the frame, the present invention generates a down-sampled luminance signal so that a sampling position in the down-sampled luminance signal is vertically shifted by 1/4. In the encoding/decoding of the lower half of the frame, the present invention generates the down-sampled luminance signal so that the sampling position in the down-sampled luminance signal is vertically shifted by 3/4. In the frame packing case of Fig. 17(b) (when a top field and a bottom field are disposed in the top half and the bottom half of one frame, respectively), the present invention generates the down-sampled luminance signal so that the sampling position in the down-sampled luminance signal is vertically shifted by 3/4 in the encoding/decoding of the upper half of the frame. In the encoding/decoding of the lower half of the frame, the present invention generates a down-sampled luminance signal so that a sampling position in the down-sampled luminance signal is vertically shifted by 1/4.

In the above-described exemplary embodiments of the invention, as is apparent from the above description, it can be configured by hardware, and can also be implemented by a computer program.

The information processing system illustrated in Fig. 18 includes a processor 1001, a program memory 1002, a storage medium 1003 for storing video data, and the storage medium 1004 for storing a bitstream. The storage medium 1003 and the storage medium 1004 may be different storage mediums, or may be storage areas on the same storage medium. A magnetic storage medium such as a hard disk may be used as the storage medium.

In the information processing system illustrated in Fig. 18, the program memory 1002 stores a program for carrying out the function of each block illustrated in each of Figs. 10 and 13, respectively. The processor 1001 performs processing according to the program stored in the program memory 1002 to carry out the functions of the video encoding device or the video decoding device illustrated in Figs. 10 and 13, respectively.

All or part of the exemplary embodiments disclosed above can be described as follows, but the configuration of the present invention is not limited thereto.

(Supplementary note 1)

A video encoding device comprising a luminance signal down-sample means configured to at least vertically down-sample a luminance signal by 1/2, and a prediction means configured to linearly predict (perform linear prediction) a color difference signal from a down-sampled luminance signal, wherein the luminance signal down-sample means shifts a sampling position in the down-sampled luminance signal depending on a scan to be processed, the luminance signal down-sample means shifts by 1/2 a sampling position in a down-sampled luminance signal under progressive scan using a filter with a coefficient of [1/2, 1/2], shifts by 1/4 a sampling position in a down-sampled luminance signal included in a top field of an interlaced scanning using a filter with a coefficient of [1/4, 3/4], and shifts by 3/4 a sampling position in the down-sampled luminance signal included in a bottom field of the interlaced scanning using a filter with a coefficient of [3/4, 1/4].

(Supplementary note 2)

A video encoding device comprising a luminance signal down-sample means configured to at least vertically down-sample a luminance signal by 1/2, and a prediction means configured to linearly predict a color difference signal from a down-sampled luminance signal, wherein the luminance signal down-sample means shifts by 1/2 a sampling position in a down-sampled luminance signal under progressive scan, shifts by 1/4 a sampling position in a down-sampled luminance signal included in a top field of an interlaced scanning, and shifts by 3/4 a sampling position in the down-sampled luminance signal included in a bottom field of the interlaced scanning, and the luminance signal down-sample means shifts by 1/2 the sampling position in the down-sampled luminance signal in the progressive scanning using a two-dimensional filter with coefficients of [[1/8, 2/8, 1/8] and [1/8, 2/8, 1/8]], shifts by 1/4 the sampling position in a down-sampled luminance signal included in a top field of the interlaced scanning using a filter with coefficients of [[3/16, 6/16, 3/16] and [1/16, 2/16, 1/16]], and shifts by 3/4 the sampling position in the down-sampled luminance signal included in a bottom field of the interlaced scanning using a filter with coefficients of [[1/16, 2/16, 1/16] and [3/16, 6/16, 3/16]].

(Supplementary note 3)

A video encoding device comprising a luminance signal down-sample means configured to at least vertically down-sample a luminance signal by 1/2, and a prediction means configured to linearly predict a color difference signal from a down-sampled luminance signal, wherein the luminance signal down-sample means shifts a sampling position in the down-sampled luminance signal depending on a scan to be processed, and the luminance signal down-sample means shifts by 1/2 a sampling position in a down-sampled luminance signal under progressive scan using a two-dimensional filter with coefficients of [[1/4, 0, 1/8] and [1/8, 2/8, 1/8]], shifts by 1/4 a sampling position in a down-sampled luminance signal included in a top field of an interlaced scanning using a filter with coefficients of [[3/8 0, 3/8] and [1/8, 0, 1/8]], and shifts by 3/4 a sampling position in the down-sampled luminance signal included in a bottom field of the interlaced scanning using a filter with coefficients of [[1/8, 0, 1/8] and [3/8 0, 3/8]].

(Supplementary note 4)

A video decoding device comprising a luminance signal down-sample means configured to at least vertically down-sample a luminance signal by 1/2, and a prediction means configured to linearly predict a color difference signal from a down-sampled luminance signal, wherein the luminance signal down-sample means shifts a sampling position in the down-sampled luminance signal depending on a scan to be processed, the luminance signal down-sample means shifts by 1/2 a sampling position in a down-sampled luminance signal under progressive scan using a filter with a coefficient of [1/2, 1/2], shifts by 1/4 a sampling position in a down-sampled luminance signal included in a top field of an interlaced scanning using a filter with a coefficient of [1/4, 3/4], and shifts by 3/4 a sampling position in the down-sampled luminance signal included in a bottom field of the interlaced scanning using a filter with a coefficient of [3/4, 1/4].

(Supplementary note 5)

A video decoding device comprising a luminance signal down-sample means configured to at least vertically down-sample a luminance signal by 1/2, and a prediction means configured to linearly predict a color difference signal from a down-sampled luminance signal, wherein the luminance signal down-sample means shifts by 1/2 a sampling position in the down-sampled luminance signal under progressive scan, shifts by 1/4 the sampling position in the down-sampled luminance signal included in a top field of an interlaced scanning, and shifts by 3/4 the sampling position in the down-sampled luminance signal included in a bottom field of the interlaced scanning, and the luminance signal down-sample means shifts by 1/2 the sampling position in the down-sampled luminance signal in the progressive scanning using a two-dimensional filter with coefficients of [[1/8, 2/8, 1/8] and [1/8, 2/8, 1/8]], shifts by 1/4 the sampling position in the down-sampled luminance signal included in the top field of the interlaced scanning using a filter with coefficients of [[3/16, 6/16, 3/16] and [1/16, 2/16, 1/16]], and shifts by 3/4 the sampling position in the down-sampled luminance signal included in the bottom field of the interlaced scanning using a filter with coefficients of [[1/16, 2/16, 1/16] and [3/16, 6/16, 3/16]].

(Supplementary note 6)

A video decoding device comprising a luminance signal down-sample means configured to at least vertically down-sample a luminance signal by 1/2, and a prediction means configured to linearly predict a color difference signal from a down-sampled luminance signal, wherein the luminance signal down-sample means shifts a sampling position in the down-sampled luminance signal depending on a scan to be processed, and the luminance signal down-sample means shifts by 1/2 the sampling position in the down-sampled luminance signal under progressive scan using a two-dimensional filter with coefficients of [[1/4, 0, 1/8] and [1/8, 2/8, 1/8]], shifts by 1/4 the sampling position in the down-sampled luminance signal included in a top field of an interlaced scanning using a filter with coefficients of [[3/8 0, 3/8] and [1/8, 0, 1/8]], and shifts by 3/4 the sampling position in the down-sampled luminance signal included in a bottom field of the interlaced scanning using a filter with coefficients of [[1/8, 0, 1/8] and [3/8 0, 3/8]].

(Supplementary note 7)

A video encoding method comprising at least vertically down-sampling a luminance signal by 1/2, linearly predicting a color difference signal from a down-sampled luminance signal, and shifting a sampling position in the down-sampled luminance signal depending on a scan to be processed, the method further comprising: shifting by 1/2 the sampling position in the down-sampled luminance signal under progressive scan using a filter with a coefficient of [1/2, 1/2], shifting by 1/4 the sampling position in the down-sampled luminance signal included in a top field of an interlaced scanning using a filter with a coefficient of [1/4, 3/4], and shifting by 3/4 the sampling position in the down-sampled luminance signal included in a bottom field of the interlaced scanning using a filter with a coefficient of [3/4, 1/4].

(Supplementary note 8)

A video encoding method comprising at least vertically down-sampling a luminance signal by 1/2, linearly predicting a color difference signal from a down-sampled luminance signal, and shifting a sampling position in the down-sampled luminance signal depending on a scan to be processed, the method further comprising: shifting by 1/2 a sampling position in a down-sampled luminance signal in progressive scan using a two-dimensional filter with coefficients of [[1/8, 2/8, 1/8] and [1/8, 2/8, 1/8]]; shifting by 1/4 a sampling position in a down-sampled luminance signal included in a top field of an interlaced scanning using a filter with coefficients of [[3/16, 6/16, 3/16] and [1/16, 2/16, 1/16]]; and shifting by 3/4 a sampling position in the down-sampled luminance signal included in a bottom field of the interlaced scanning using a filter with coefficients of [[1/16, 2/16, 1/16] and [3/16, 6/16, 3/16]].

(Supplementary note 9)

A video encoding method comprising at least vertically down-sampling a luminance signal by 1/2, linearly predicting a color difference signal from a down-sampled luminance signal, and shifting a sampling position in the down-sampled luminance signal depending on a scan to be processed, the method further comprising: shifting by 1/2 a sampling position in a down-sampled luminance signal under progressive scan using a two-dimensional filter with coefficients of [[1/4, 0, 1/8] and [1/8, 2/8, 1/8]]; shifting by 1/4 a sampling position in a down-sampled luminance signal included in a top field of an interlaced scanning using a filter with coefficients of [[3/8 0, 3/8] and [1/8, 0, 1/8]]; and shifting by 3/4 a sampling position in the down-sampled luminance signal included in a bottom field of the interlaced scanning using a filter with coefficients of [[1/8, 0, 1/8] and [3/8 0, 3/8]].

(Supplementary note 10)

A video decoding method comprising at least vertically down-sampling a luminance signal by 1/2, linearly predicting a color difference signal from a down-sampled luminance signal, and shifting a sampling position in the down-sampled luminance signal depending on a scan to be processed, the method further comprising: shifting by 1/2 a sampling position in a down-sampled luminance signal under progressive scan using a filter with a coefficient of [1/2, 1/2]; shifting by 1/4 a sampling position in a down-sampled luminance signal included in a top field of an interlaced scanning using a filter with a coefficient of [1/4, 3/4]; and shifting by 3/4 a sampling position in the down-sampled luminance signal included in a bottom field of the interlaced scanning using a filter with a coefficient of [3/4, 1/4].

(Supplementary note 11)

A video decoding method comprising at least vertically down-sampling a luminance signal by 1/2, linearly predicting a color difference signal from a down-sampled luminance signal, and shifting a sampling position in the down-sampled luminance signal depending on a scan to be processed, the method further comprising: shifting by 1/2 a sampling position in a down-sampled luminance signal under progressive scan using a two-dimensional filter with coefficients of [[1/8, 2/8, 1/8] and [1/8, 2/8, 1/8]]; shifting by 1/4 a sampling position in a down-sampled luminance signal included in a top field of an interlaced scanning using a filter with coefficients of [[3/16, 6/16, 3/16] and [1/16, 2/16, 1/16]]; and shifting by 3/4 a sampling position in the down-sampled luminance signal included in a bottom field of the interlaced scanning using a filter with coefficients of [[1/16, 2/16, 1/16] and [3/16, 6/16, 3/16]].

(Supplementary note 12)

A video decoding method comprising at least vertically down-sampling a luminance signal by 1/2, linearly predicting a color difference signal from a down-sampled luminance signal, and shifting a sampling position in the down-sampled luminance signal depending on a scan to be processed, the method further comprising: shifting by 1/2 a sampling position in a down-sampled luminance signal under progressive scan using a two-dimensional filter with coefficients of [[1/4, 0, 1/8] and [1/8, 2/8, 1/8]]; shifting by 1/4 a sampling position in a down-sampled luminance signal included in a top field of an interlaced scanning using a filter with coefficients of [[3/8 0, 3/8] and [1/8, 0, 1/8]]; and shifting by 3/4 a sampling position in the down-sampled luminance signal in a bottom field of the interlaced scanning using a filter with coefficients of [[1/8, 0, 1/8] and [3/8 0, 3/8]].

(Supplementary note 13)

A video encoding program for causing a computer to execute processes of at least vertically down-sampling a luminance signal by 1/2, linearly predicting a color difference signal from a down-sampled luminance signal, and shifting a sampling position in the down-sampled luminance signal depending on a scan to be processed, the video encoding program for causing a computer to execute processes of shifting by 1/2 a sampling position in a down-sampled luminance signal under progressive scan; shifting by 1/4 a sampling position in a down-sampled luminance signal included in a top field of an interlaced scanning; and shifting by 3/4 a sampling position in the down-sampled luminance signal included in a bottom field of the interlaced scanning.

(Supplementary note 14)

The video encoding program of Supplementary note 13 for causing a computer to execute processes of shifting by 1/2 a sampling position in the down-sampled luminance signal under progressive scan using a filter with a coefficient of [1/2, 1/2]; shifting by 1/4 a sampling position in the down-sampled luminance signal included in a top field of an interlaced scanning using a filter with a coefficient of [1/4, 3/4]; and shifting by 3/4 a sampling position in the down-sampled luminance signal included in a bottom field in the interlaced scanning using a filter with a coefficient of [3/4, 1/4].

(Supplementary note 15)

The video encoding program of Supplementary note 13 for causing a computer to execute processes of shifting by 1/2 a sampling position in a down-sampled luminance signal under progressive scan using a two-dimensional filter with coefficients of [[1/8, 2/8, 1/8] and [1/8, 2/8, 1/8]]; shifting by 1/4 a sampling position in the down-sampled luminance signal included in a top field of an interlaced scanning using a filter with coefficients of [[3/16, 6/16, 3/16] and [1/16, 2/16, 1/16]]; and shifting by 3/4 a sampling position in the down-sampled luminance signal included in a bottom field under interlaced scan using a filter with coefficients of [[1/16, 2/16, 1/16] and [3/16, 6/16, 3/16]].

(Supplementary note 16)

The video encoding program of Supplementary note 13 for causing a computer to execute processes of shifting by 1/2 a sampling position in a down-sampled luminance signal under progressive scan using a two-dimensional filter with coefficients of [[1/4, 0, 1/8] and [1/8, 2/8, 1/8]]; shifting by 1/4 a sampling position in a down-sampled luminance signal included in a top field of an interlaced scanning using a filter with coefficients of [[3/8 0, 3/8] and [1/8, 0, 1/8]]; and shifting by 3/4 a sampling position in the down-sampled luminance signal included in a bottom field of the interlaced scanning using a filter with coefficients of [[1/8, 0, 1/8] and [3/8 0, 3/8]].

(Supplementary note 17)

A video decoding program for causing a computer to execute processes of vertically down-sampling a luminance signal by 1/2, linearly predicting a color difference signal from a down-sampled luminance signal, and shift a sampling position in the down-sampled luminance signal depending on a scan to be processed, the video decoding program for causing a computer to execute processes of shifting by 1/2 a sampling position in the down-sampled luminance signal under progressive scan; shifting by 1/4 a sampling position in the down-sampled luminance signal included in a top field of an interlaced scanning; and shifting by 3/4 a sampling position in the down-sampled luminance signal included in a bottom field of the interlaced scanning.

(Supplementary note 18)

The video decoding program of Supplementary note 17 for causing a computer to execute processes of shifting by 1/2 a sampling position in the down-sampled luminance signal under progressive scan using a filter with a coefficient of [1/2, 1/2]; shifting by 1/4 a sampling position in the down-sampled luminance signal included in a top field of an interlaced scanning using a filter with a coefficient of [1/4, 3/4]; and shifting by 3/4 a sampling position in the down-sampled luminance signal included in a bottom field of the interlaced scanning using a filter with a coefficient of [3/4, 1/4].

(Supplementary note 19)

The video decoding program of Supplementary note 17 for causing a computer to execute processes of shifting by 1/2 a sampling position in the down-sampled luminance signal under progressive scan using a two-dimensional filter with coefficients of [[1/8, 2/8, 1/8] and [1/8, 2/8, 1/8]]; shifting by 1/4 a sampling position in the down-sampled luminance signal included in a top field of an interlaced scanning using a filter with coefficients of [[3/16, 6/16, 3/16] and [1/16, 2/16, 1/16]]; and shifting by 3/4 a sampling position in the down-sampled luminance signal included in a bottom field of the interlaced scanning using a filter with coefficients of [[1/16, 2/16, 1/16] and [3/16, 6/16, 3/16]].

(Supplementary note 20)

The video decoding program of Supplementary note 17 for causing a computer to execute processes of shifting by 1/2 a sampling position in the down-sampled luminance signal under progressive scanning using a two-dimensional filter with coefficients of [[1/4, 0, 1/8] and [1/8, 2/8, 1/8]]; shifting by 1/4 a sampling position in the down-sampled luminance signal included in a top field of an interlaced scanning using a filter with coefficients of [[3/8 0, 3/8] and [1/8, 0, 1/8]]; and shifting by 3/4 a sampling position in the down-sampled luminance signal included in a bottom field of the interlaced scanning using a filter with coefficients of [[1/8, 0, 1/8] and [3/8 0, 3/8]].

The present invention has been described above with reference the exemplary embodiments and examples, but the present invention is not limited to the aforementioned exemplary embodiments and examples. The configurations and details of the present invention can be modified in various forms understandable to those skilled in the art, without departing from the scope of the present invention.

This application is based upon and claims the benefit of priority from Japanese Patent Application No.

2011-241450, filed November 2, 2011, the entire contents of which are incorporated herein by reference.

**Industrial Applicability**

The present invention is preferably applicable to a video encoding device and a video decoding device for predicting color difference signals from a down-sampled luminance signal.

**Reference Signs List**

101     predictor
102     frequency transformer
103     quantizer
104     entropy encoder
105     inverse quantizer/inverse frequency transformer
106     buffer
107     down-sampler with sampling position shifter
201     entropy decoder
202     inverse quantizer/inverse frequency transformer
203     predictor
204     buffer
205     down-sampler with sampling position shifter

**Claims**

1. A video encoding device comprising:

a luminance signal down-sample means configured to down-sample a luminance signal; and
a prediction means configured to linearly predict a color difference signal from a down-sampled luminance signal,
wherein the luminance signal down-sample means shifts a sampling position in the down-sampled luminance signal depending on a scan to be processed.

2. The video encoding device according to claim 1,
wherein the luminance signal down-sample means at least vertically down-samples the luminance signal by 1/2, and
Wherein the luminance signal down-sample means shifts by 1/2 a sampling position in the down-sampled luminance signal under progressive scan, shifts by 1/4 a sampling position in the down-sampled luminance signal included in a top field of an interlaced scanning, and shifts by 3/4 a sampling position in the down-sampled luminance signal included in a bottom field of the interlaced scanning.

3. A video decoding device comprising:

a luminance signal down-sample means configured to down-sample a luminance signal; and
a prediction means configured to linearly predict a color difference signal from a down-sampled luminance signal,
wherein the luminance signal down-sample means shifts a sampling position in the down-sampled luminance signal depending on a scan to be processed.

4. The video decoding device according to claim 3,
wherein the luminance signal down-sample means at least vertically down-samples the luminance signal by 1/2, and
wherein the luminance signal down-sample means shifts by 1/2 a sampling position in the down-sampled luminance signal under progressive scan, shifts by 1/4 a sampling position in the down-sampled luminance signal included in a top field of an interlaced scanning, and shifts by 3/4 a sampling position in the down-sampled luminance signal included in a bottom field of the interlaced scanning.

5. A video encoding method comprising:

down-sampling a luminance signal and

linearly predicting a color difference signal from a down-sampled luminance signal,
the method further comprising:

shifting a sampling position in the down-sampled luminance signal depending on a scan to be processed.

6. The video encoding method according to claim 5,
wherein the luminance signal is at least vertically down-sampled by 1/2,
the method further comprises:

shifting by 1/2 a sampling position in the down-sampled luminance signal under progressive scan;
shifting by 1/4 a sampling position in the down-sampled luminance signal included in a top field of an interlaced scanning; and
shifting by 3/4 a sampling position in the down-sampled luminance signal included in a bottom field of the interlaced scanning.

7. A video decoding method comprising:

down-sampling a luminance signal and
linearly predicting a color difference signal from a down-sampled luminance signal,
the method further comprising:

shifting a sampling position in the down-sampled luminance signal depending on a scan to be processed.

8. The video decoding method according to claim 7,
wherein the luminance signal is at least vertically down-sampled by 1/2,
the method further comprises:

shifting by 1/2 a sampling position in the down-sampled luminance signal of a progressive scanning;
shifting by 1/4 a sampling position in the down-sampled luminance signal included in a top field of an interlaced scanning; and
shifting by 3/4 a sampling position in the down-sampled luminance signal included in a bottom field of the interlaced scanning.

9. A video encoding program for causing a computer to execute a process of down-sampling a luminance signal and a process of linearly predicting a color difference signal from a down-sampled luminance signal, and the video encoding program causes a computer to execute a process of shifting a sampling position in the down-sampled luminance signal depending on a scan to be processed.

10. A video decoding program for causing a computer to execute a process of down-sampling a luminance signal and a process of linearly predicting a color difference signal from a down-sampled luminance signal, and the video decoding program causes a computer to execute a process of shifting a sampling position in the down-sampled luminance signal depending on a scan to be processed.

# FIG. 1

# FIG. 2

EP 2 775 714 A1

# FIG. 3

LCU

CU

Frame

t

EP 2 775 714 A1

# FIG. 4

2Nx2N          NxN

# FIG. 5

(a) PROGRESSIVE SCAN

(b) INTERLACED SCAN

TOP FIELD

BOTTOM FIELD

# FIG. 6

○:LUMINANCE
SAMPLING POSITION

△:COLOR DIFFERENCE
SAMPLING POSITION

1/2

1/2

1/2

1/2

# FIG. 7

○:LUMINANCE
SAMPLING POSITION

△:COLOR DIFFERENCE
SAMPLING POSITION

# FIG. 8

○:LUMINANCE
SAMPLING POSITION

△:COLOR DIFFERENCE
SAMPLING POSITION

# FIG. 9

○:LUMINANCE SAMPLING POSITION     △:COLOR DIFFERENCE SAMPLING POSITION     ☆:SAMPLING POSITION IN DOWN-SAMPLED LUMINANCE SIGNAL

(a) 4 : 2 : 0 PROGRESSIVE SCAN

(b) TOP FIELD OF INTERLACED SCAN

(c) BOTTOM FIELD OF INTERLACED SCAN

FIG. 10

# FIG. 11

START

S101
PROGRESSIVE SCAN? —N→

Y

S102
GENERATE DOWN-SAMPLED LUMINANCE SIGNAL SO THAT SAMPLING POSITION IS VERTICALLY SHIFTED BY 1/2

S103
TOP FIELD OF INTERLACED SCAN? —N→

Y

S104
GENERATE DOWN-SAMPLED LUMINANCE SIGNAL SO THAT SAMPLING POSITION IS VERTICALLY SHIFTED BY 1/4

S105
BOTTOM FIELD OF INTERLACED SCAN? —N→

Y

S106
GENERATE DOWN-SAMPLED LUMINANCE SIGNAL SO THAT SAMPLING POSITION IS VERTICALLY SHIFTED BY 1/4

END

# FIG. 12

◯:LUMINANCE          △:COLOR DIFFERENCE          ☆:SAMPLING POSITION
SAMPLING               SAMPLING POSITION              IN DOWN-SAMPLED
POSITION                                              LUMINANCE SIGNAL

(a) 4 : 2 : 0 PROGRESSIVE SCAN

(b) TOP FIELD OF INTERLACED SCAN

(c) BOTTOM FIELD OF INTERLACED SCAN

# FIG. 13

# FIG. 14

EP 2 775 714 A1

```
                    START

                     │
                     ▼
                  S201
          ┌─────────────────┐          N
          │   PROGRESSIVE    ├──────────────────┐
          │     SCAN?        │                  │
          └─────────────────┘                   ▼
                  │ Y                         S203
                  ▼         S202       ┌─────────────────┐      N
    ┌──────────────────────────┐      │   TOP FIELD     ├──────────────┐
    │  GENERATE DOWN-SAMPLED    │      │ OF INTERLACED   │              │
    │ LUMINANCE SIGNAL SO THAT  │      │     SCAN?       │              ▼
    │  SAMPLING POSITION IS     │      └─────────────────┘           S205
    │ VERTICALLY SHIFTED BY 1/2 │              │ Y                ┌─────────────────┐   N
    └──────────────────────────┘              ▼       S204       │  BOTTOM FIELD   ├──────┐
                  │              ┌──────────────────────────┐    │ OF INTERLACED   │      │
                  │              │  GENERATE DOWN-SAMPLED    │    │     SCAN?       │      │
                  │              │ LUMINANCE SIGNAL SO THAT  │    └─────────────────┘      │
                  │              │  SAMPLING POSITION IS     │            │ Y              │
                  │              │ VERTICALLY SHIFTED BY 1/4 │            ▼      S206       │
                  │              └──────────────────────────┘  ┌──────────────────────────┐│
                  │                          │                 │  GENERATE DOWN-SAMPLED    ││
                  │◄─────────────────────────┘                 │ LUMINANCE SIGNAL SO THAT  ││
                  │                                            │  SAMPLING POSITION IS     ││
                  │                                            │ VERTICALLY SHIFTED BY 1/4 ││
                  │                                            └──────────────────────────┘│
                  │◄──────────────────────────────────────────────────────┘               │
                  │◄──────────────────────────────────────────────────────────────────────┘
                  ▼
                 END
```

# FIG. 15

○:LUMINANCE
SAMPLING POSITION

☆:SAMPLING POSITION
IN DOWN-SAMPLED
LUMINANCE SIGNAL

(a) 4 : 2 : 0 PROGRESSIVE SCAN

(b) TOP FIELD OF INTERLACED SCAN

(c) BOTTOM FIELD OF INTERLACED SCAN

# FIG. 16

○:LUMINANCE
SAMPLING POSITION

☆:SAMPLING POSITION
IN DOWN-SAMPLED
LUMINANCE SIGNAL

(a) 4 : 2 : 0 PROGRESSIVE SCAN

(b) TOP FIELD OF INTERLACED SCAN

(c) BOTTOM FIELD OF INTERLACED SCAN

# FIG. 17

(a) FRAME PACKING
(TOP FIELD + BOTTOM FIELD)

(b) FRAME PACKING
(BOTTOM FIELD + TOP FIELD)

# FIG. 18

## INTERNATIONAL SEARCH REPORT

<table>
<tr><td>International application No.</td></tr>
<tr><td>PCT/JP2012/006848</td></tr>
</table>

A.   CLASSIFICATION OF SUBJECT MATTER
*H04N7/32(2006.01)i*

According to International Patent Classification (IPC) or to both national classification and IPC

B.   FIELDS SEARCHED

Minimum documentation searched (classification system followed by classification symbols)
H04N7/26-7/68

Documentation searched other than minimum documentation to the extent that such documents are included in the fields searched
Jitsuyo Shinan Koho          1922-1996   Jitsuyo Shinan Toroku Koho   1996-2012
Kokai Jitsuyo Shinan Koho    1971-2012   Toroku Jitsuyo Shinan Koho   1994-2012

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| A | Shun-ichi Sekiguchi et al., Proposal on the support of interlace format in HEVC, Joint Collaborative Team on Video Coding (JCT-VC) of ITU-T SG16 WP3 and ISO/IEC JTC1/SC29/WG11, JCTVC-F194_r1, 6th Meeting: Torino, IT, 2011.07, pp.1-3 | 1-10 |
| A | Akira Minezawa et al., An improvement to chroma intra prediction from luma, Joint Collaborative Team on Video Coding (JCT-VC) of ITU-T SG16 WP3 and ISO/IEC JTC1/SC29/WG11, JCTVC-F173, 6th Meeting: Torino, IT, 2011.07, pp.1-10 | 1-10 |

☒   Further documents are listed in the continuation of Box C.          ☐   See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 25 December, 2012 (25.12.12) | 08 January, 2013 (08.01.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/006848

C (Continuation).    DOCUMENTS CONSIDERED TO BE RELEVANT

| Category* | Citation of document, with indication, where appropriate, of the relevant passages | Relevant to claim No. |
|---|---|---|
| A | Jianle Chen et al., CE6.a.4: Chroma intra prediction by reconstructed luma samples, Joint Collaborative Team on Video Coding (JCT-VC) of ITU-T SG16 WP3 and ISO/IEC JTC1/SC29/WG11, JCTVC-E266_r1, 5th Meeting: Geneva, 2011.03, pp.1-10 | 1-10 |
| A | Jungsun Kim et al., New intra chroma prediction using inter-channel correlation, Joint Collaborative Team on Video Coding (JCT-VC) of ITU-T SG16 WP3 and ISO/IEC JTC1/SC29/WG11, JCTVC-B021, 2nd Meeting: Geneva, CH, 2010.07, pp.1-9 | 1-10 |
| P,X | Keiichi Chono and Hirofumi Aoki, On issues for interlaced format support in HEVC standard, Joint Collaborative Team on Video Coding (JCT-VC) of ITU-T SG16 WP3 and ISO/IEC JTC1/SC29/WG11, JCTVC-G170-r1, 7th Meeting: Geneva, CH, 2011.11, pp.1-6 | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011241450 A

**Non-patent literature cited in the description**

- **JIANLE CHEN ; VADIM SEREGIN ; WOO-JIN HAN ; JUNGSUN KIM ; BYEONGMOON JEON.** CE6.a.4: Chroma intra prediction by reconstructed luma samples. *JCTVC-E266, Joint Collaborative Team on Video Coding (JCT-VC) of ITU-T SG16 WP3 and ISO/IEC JTC1/SC29/WG11 5th Meeting,* 16 March 2011
- **BENJAMIN BROSS ; WOO-JIN HAN ; JENS-RAIN-ER OHM ; GARY J. SULLIVAN ; THOMAS WIE-GAND.** WD4: Working Draft 4 of High-Efficiency Video Coding. *JCTVC-F803_d1, Joint Collaborative Team on Video Coding (JCT-VC) of ITU-T SG16 WP3 and ISO/IEC JTC1/SC29/WG11 6th Meeting,* 14 July 2011
- **MINEZAWA, K. ; SUGIMOTO, S. ; SEKIGUCHI (MITSUBISHI.** An improvement to chroma intra prediction from luma. *JCTVC-F173, Joint Collaborative Team on Video Coding (JCT-VC) of ITU-T SG16 WP3 and ISO/IEC JTC1/SC29/WG11 6th Meeting,* 14 July 2011
- **JIANLE CHEN.** BoG report on simplification of intra_chromaFromLuma mode prediction. *JCTVC-F760, Joint Collaborative Team on Video Coding (JCT-VC) of ITU-T SG16 WP3 and ISO/IEC JTC1/SC29/WG11 6th Meeting: Torino, IT,* 14 July 2011